# EUROPEAN PATENT APPLICATION

(11) **EP 4 439 754 A2**
(43) Date of publication of application: **02.10.2024**
(21) Application number: 24164529.0
(22) Date of filing: 19.03.2024
(51) Int. Cl.: H01M 10/04, H01M 10/625, H01M 10/647, H01M 10/653, H01M 50/209, H01M 50/233, H01M 50/242, H01M 50/244, H01M 50/258, H01M 50/264, H01M 50/289

(54) **BATTERY PACK**

(30) Priority: 26.03.2023 KR 20230039386
(71) Applicant: Samsung SDI Co., Ltd., Yongin-si, Gyeonggi-do 17084 (KR)
(72) Inventor: CHO, Mansik, 17084 Yongin-si (KR); PARK, Shidong, 17084 Yongin-si (KR); SONG, Moonsung, 17084 Yongin-si (KR); BAE, Jangwoong, 17084 Yongin-si (KR); KIM, Jaemin, 17084 Yongin-si (KR)
(74) Representative: Marks & Clerk LLP

(57) **Abstract**

A battery pack includes: first and second cell stacks, each including a plurality of battery cells arranged in a first direction, the first and second cell stacks being adjacent to each other in a second direction crossing the first direction; a first middle plate extending in the first direction between side surfaces of the first and second cell stacks; a front end plate and a rear reinforcement plate respectively coupled to one end and another end of the first middle plate and respectively extending in the second direction along front and rear surfaces of the first and second cell stacks; and a first side plate and a second side plate respectively extending in the first direction along side surfaces of the first and second cell stacks on sides opposite to the first middle plate in the second direction.

## Description

### BACKGROUND

### 1. Field

Aspects of embodiments of the present disclosure relate to a battery pack.

### 2. Description of the Related Art

Generally, secondary batteries are designed to be charged and discharged, unlike primary batteries that are not designed to be charged. Secondary batteries are used as energy sources for mobile devices, electric vehicles, hybrid vehicles, electric bicycles, uninterruptible power supplies, etc. Also, depending on the type of external device to which the secondary batteries are to be applied, the secondary batteries may be used in the form of a single battery or in the form of a module in which a plurality of secondary batteries are connected and bundled together into a unit.

A small mobile device, such as a mobile phone, may operate for a certain period of time with only the output and capacity of a single battery. However, when a long period of use and/or high power is desired, such as in the case of an electric vehicle or a hybrid vehicle that consumes a lot of power, a module type including a plurality of batteries is preferred due to the output and capacity thereof. Also, the output voltage or output current may be increased based on the number of batteries embedded therein.

### SUMMARY

Embodiments of the present disclosure include a battery pack including a plurality of cell stacks. The structural rigidity of the battery pack is reinforced by plates that extend across the inside of the battery pack, and the battery pack's robustness against external impact or deformation is improved by the plates that extend across the inside of the battery pack in two different directions.

Embodiments of the present disclosure include a battery pack. The battery pack has an extended form in which a plurality of modules are provided by repeatedly stacking module units having substantially the same structure, and the battery pack is extendable to adaptively include a variable number of modules according to desired electrical outputs and capacities.

Additional aspects and features of the present disclosure will be set forth, in part, in the description which follows and, in part, will be apparent from the description or may be learned by practice of the described embodiments of the present disclosure.

According to an embodiment of the present disclosure, a battery pack includes: first and second cell stacks, each including a plurality of battery cells arranged in a first direction, the first and second cell stacks being adjacent to each other in a second direction crossing the first direction; a first middle plate extending in the first direction between side surfaces of the first and second cell stacks; a front end plate and a rear reinforcement plate respectively coupled to one end and another end of the first middle plate and respectively extending in the second direction along front and rear surfaces of the first and second cell stacks; and a first side plate and a second side plate respectively extending in the first direction along side surfaces of the first and second cell stacks on sides opposite to the first middle plate in the second direction.

The plurality of battery cells may be arranged forward and rearward in the first direction.

The first middle plate may include a plurality of protrusions on both side surfaces thereof in the second direction that protrude toward side surfaces of the battery cells adjacent to each other such that the protrusions are respectively arranged between the side surfaces of the battery cells.

The first side plate and the second side plate may each include a plurality of protrusions on inner surfaces thereof facing the battery cells that protrude toward side surfaces of the battery cells adjacent to each other such that the protrusions are respectively arranged between the side surfaces of the battery cells.

The first middle plate may include a front coupling portion at one end thereof and a rear coupling portion at another end thereof. The front coupling portion may be coupled to the front end plate, and the rear coupling portion may be coupled to the rear reinforcement plate. The front coupling portion and the rear coupling portion may protrude in the second direction.

A height of each of the front coupling portion and the rear coupling portion may be lower than that of the first middle plate in a third direction crossing the first and second directions.

The front end plate and the rear reinforcement plate may each have a first coupling portion recessed in the first direction at a central position thereof. The front end plate may be coupled to one end of the first middle plate at the corresponding first coupling portion, and the rear reinforcement plate may be coupled to another end of the first middle plate at the corresponding first coupling portion.

The first coupling portion of the front end plate may be recessed toward the inside of the front end plate in the first direction.

The first coupling portion of the rear reinforcement plate may be recessed toward the inside of the rear reinforcement plate in the first direction.

A height of the first coupling portion of the front end plate may be less than that of the front end plate in a third direction crossing the first and second directions, and a height of the first coupling portion of the rear reinforcement plate may be greater than that of the rear reinforcement plate in the third direction.

The first coupling portion of the rear reinforcement plate may protrude upwardly in the third direction at or from the central position of the rear reinforcement plate.

The front end plate and the rear reinforcement plate may have different heights from each other in a third direction crossing the first and second directions.

The battery pack may further include third and fourth cell stacks, each including a plurality of battery cells arranged in the first direction. The plurality of battery cells may be arranged forward and rearward in the first direction. The third and fourth cell stacks may be respectively arranged on a rear side of the first and second cell stacks in the first direction and adjacent to each other in the second direction.

The battery pack may further include: a second middle plate extending in the first direction between side surfaces of the third and fourth cell stacks; and a front reinforcement plate and a rear end plate respectively coupled to one end and another end of the second middle plate and respectively extending in the second direction along front and rear surfaces of the third and fourth cell stacks. The first and second side plates may extend in the first direction along side surfaces of the first to fourth cell stacks on the sides opposite to the first and second middle plates in the second direction.

The rear reinforcement plate may extend along the rear surfaces of the first and second cell stacks, and the front reinforcement plate may extend across the front surfaces of the third and fourth cell stacks. The rear reinforcement plate and the front reinforcement plate may overlap each other in the first direction.

The rear reinforcement plate and the front reinforcement plate may be coupled to first coupling portions of the first and second side plates arranged at central positions of the first and second side plates.

The first coupling portions of the first and second side plates may be recessed in the second direction and may have heights less than that of the first and second side plates in a third direction crossing the first and second directions.

The first and second side plates may each have cut-out portions arranged above and recessed downwardly toward the first coupling portions of the first and second side plates, and the cut-out portions may be formed above the first coupling portions of the first and second side plates in the third direction.

The first and second middle plates may be spaced apart from each other in the first direction and may individually cover the side surfaces of the first and third cell stacks or individually cover the side surfaces of the second and fourth cell stacks. The first side plate may continuously cover (entirely cover) the side surfaces of the first and third cell stacks arranged in the first direction, and the second side plate may continuously cover the side surfaces of the second and fourth cell stacks arranged in the first direction.

The rear reinforcement plate and the front reinforcement plate may extend in the second direction, and the rear reinforcement plate and the front reinforcement plate may pass through a space between the first and second middle plates and may continuously extend in a direction crossing the direction in which the first and second middle plates extend.

The front end plate and the rear end plate may each include second and third coupling portions at both ends of the front and rear end plates in the second direction for coupling with the first and second side plates, respectively.

Each of the front and rear end plates may have a wide upper portion adjacent to electrode terminals of the battery cells and a narrow lower portion at where the second and third coupling portions of the front and rear end plates are formed.

The first side plate and the second side plate may each include second and third coupling portions that are bent in the second direction at lower positions thereof to cover the second and third coupling portions of the front and rear end plates.

At least some of the above and other features of the invention are set out in the claims and clauses below.

### BRIEF DESCRIPTION OF THE DRAWINGS

The above and other aspects and features of the present disclosure will be more apparent from the following description taken in conjunction with the accompanying drawings, in which:
FIG. 1 is a perspective view of a battery pack according to embodiments of the present disclosure;
FIG. 2 is an exploded perspective view showing a first module and a second module of the battery pack shown in FIG. 1;
FIGS. 3 and 4 are an exploded perspective view of the first module shown in FIG. 2 and an exploded perspective view of the second module shown in FIG. 2, respectively;
FIG. 5 is an exploded perspective view illustrating coupling between the first module and the second module shown in FIG. 1;
FIG. 6 is a perspective view of front and rear end plates shown in FIG. 1;
FIG. 7 is a perspective view of rear and front reinforcement plates shown in FIG. 1;
FIG. 8 is a perspective view of a middle plate shown in FIG. 1;
FIG. 9 is a perspective view of side plates shown in FIG. 1;
FIG. 10 is an exploded perspective view of a battery pack according to other embodiments of the present disclosure; and
FIG. 11 is an exploded perspective view of a power supply device including a plurality of battery packs shown in FIG. 10.

### DETAILED DESCRIPTION

Reference will now be made, in detail, to embodiments, examples of which are illustrated in the accompanying drawings. The described embodiments may have different forms and should not be construed as being limited to the descriptions set forth herein. Accordingly, embodiments are merely described below, by referring to the figures, to explain aspects and features of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Hereinafter, a battery pack according to embodiments of the present disclosure are described with reference to the accompanying drawings.

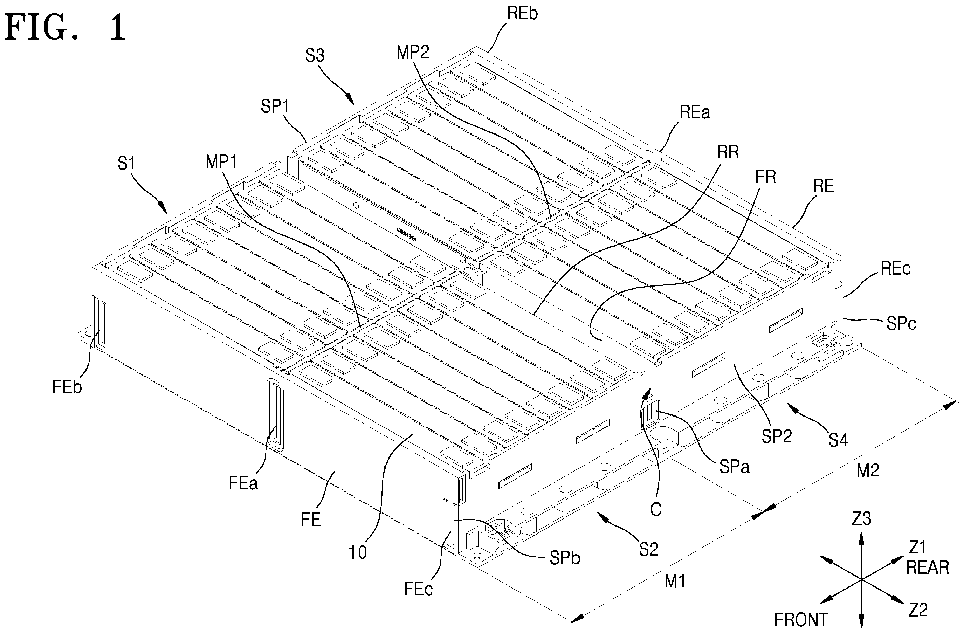

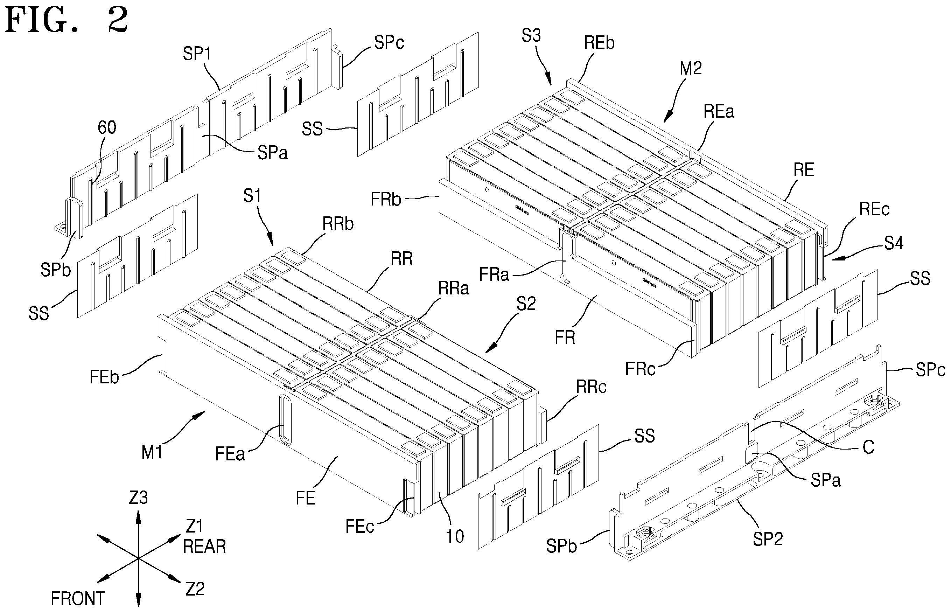

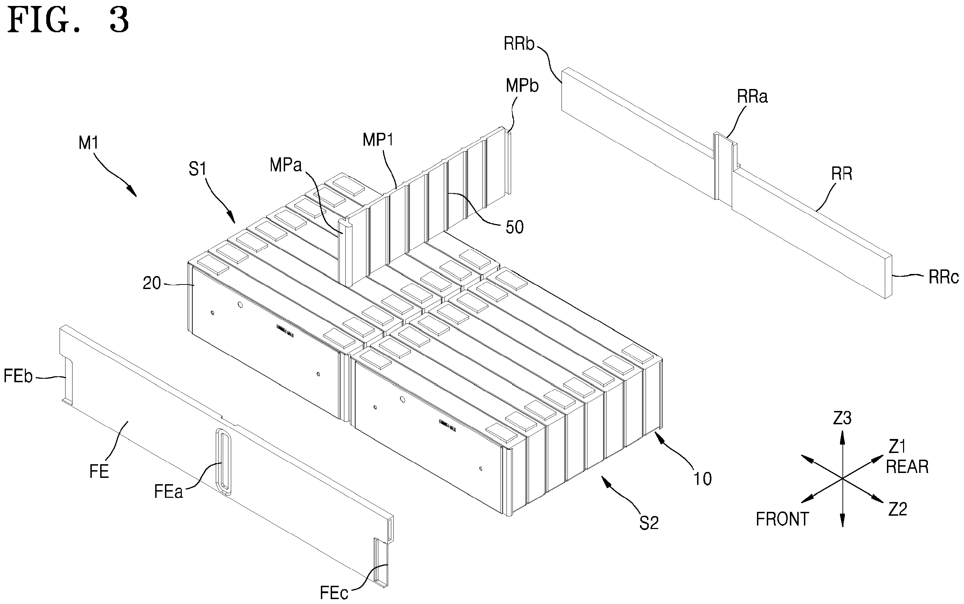

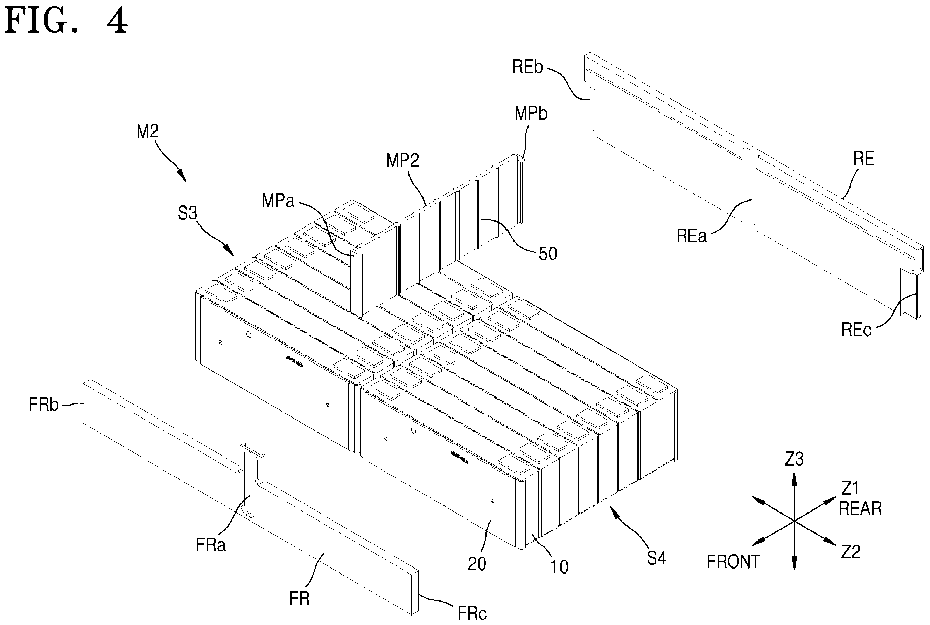

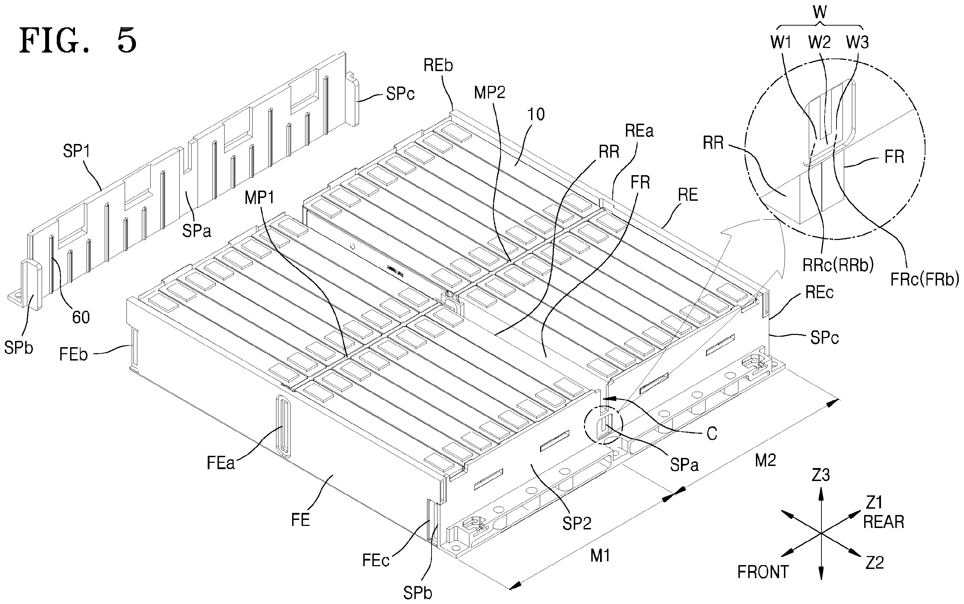

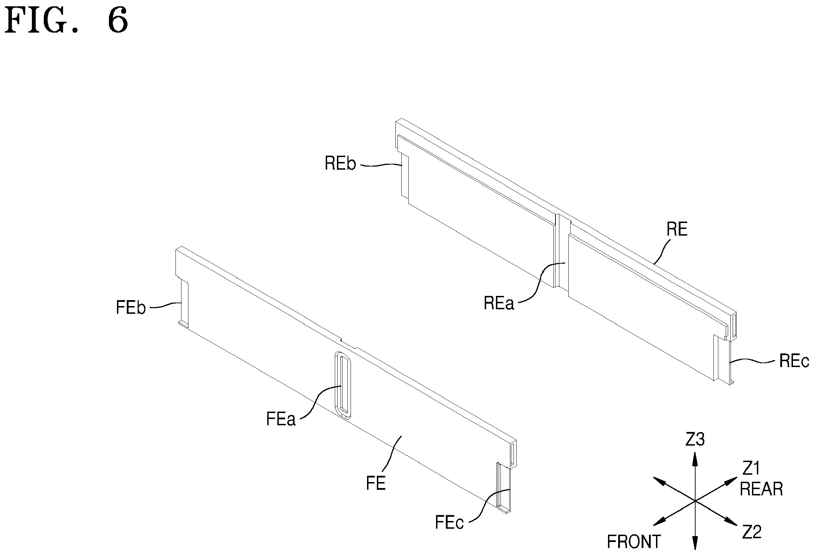

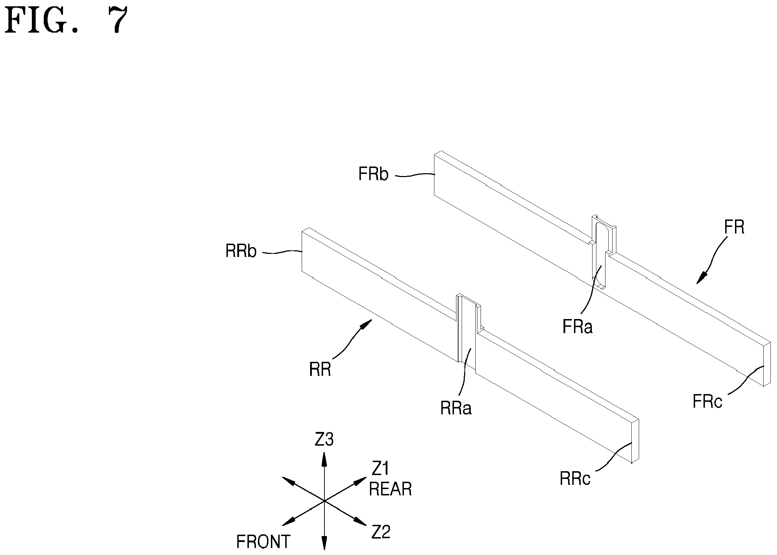

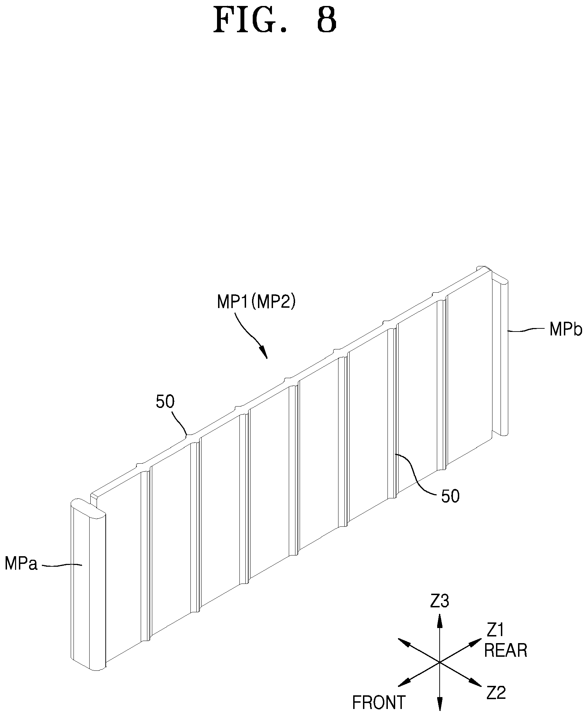

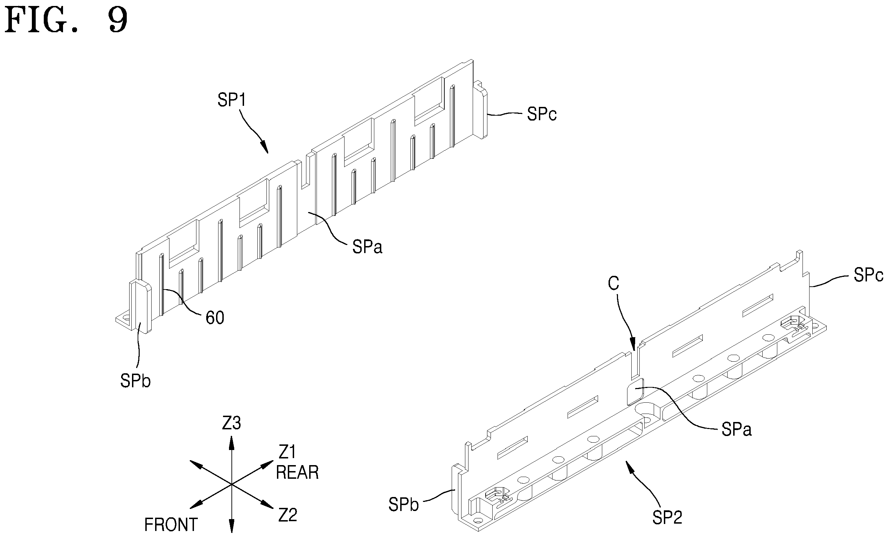

FIG. 1 is a perspective view of a battery pack according to embodiments of the present disclosure. FIG. 2 is an exploded perspective view showing a first module M1 and a second module M2 of the battery pack shown in FIG. 1. FIGS. 3 and 4 are an exploded perspective view of the first module M1 shown in FIG. 2 and an exploded perspective view of the second module M2 shown in FIG. 2, respectively. FIG. 5 is an exploded perspective view illustrating coupling between the first module M1 and the second module M2 shown in FIG. 1. FIG. 6 is a perspective view of front and rear end plates FE and RE shown in FIG. 1. FIG. 7 is a perspective view of rear and front reinforcement plates RR and FR shown in FIG. 1. FIG. 8 is a perspective view of first and second middle plates MP1 and MP2 shown in FIG. 1. FIG. 9 is a perspective view of first and second side plates SP1 and SP2 shown in FIG. 1.

Referring to the drawings, a battery pack, according to embodiments of the present disclosure, may include a plurality of cell stacks S1, S2, S3, and S4, each including battery cells 10 arranged forward and rearward in (e.g., arranged along) a first direction Z1. The battery pack may also include a first middle plate MP1, which extends in the first direction Z1 between the first and second cell stacks S1 and S2, which are adjacent to each other in a second direction Z2 crossing the first direction Z1, a front end plate FE, which is coupled to a front coupling portion MPa of the first middle plate MP1 in the first direction Z1 and covers the front sides of the first and second cell stacks S1 and S2, and a rear reinforcement plate RR, which is coupled to a rear coupling portion MPb of the first middle plate MP1 and covers the rear sides of the first and second cell stacks S1 and S2.

In embodiments of the present disclosure, the front end plate FE and the rear reinforcement plate RR may have first coupling portions FEa and RRa, respectively, which are coupled to the front coupling portion MPa and the rear coupling portion MPb of the first middle plate MP1, respectively. In embodiments of the present disclosure, the front coupling portion MPa of the first middle plate MP1 and the first coupling portion FEa of the front end plate FE may be welded together while overlapping each other. Similarly, the rear coupling portion MPb of the first middle plate MP1 and the first coupling portion RRa of the rear reinforcement plate RR may be welded together while overlapping each other.

In embodiments of the present disclosure, the first middle plate MP1 may extend between (e.g., may extend entirely between) the first and second cell stacks S1 and S2, which are adjacent to each other in the second direction Z2. Therefore, the first coupling portion FEa of the front end plate FE coupled to the front coupling portion MPa of the first middle plate MP1 and the first coupling portion RRa of the rear reinforcement plate RR coupled to the rear coupling portion MPb of the first middle plate MP1 may be respectively formed at the centers of the front end plate FE and the rear reinforcement plate RR, both of which extend in the second direction Z2. The front end plate FE and the rear reinforcement plate RR may extend in the second direction Z2 and may respectively have the first coupling portions FEa and RRa formed at central positions thereof in the second direction Z2 and second and third coupling portions FEb, FEc, RRb, and RRc formed at both ends (e.g., opposite ends) thereof in the second direction Z2. The first coupling portions FEa and RRa of the front end plate FE and the rear reinforcement plate RR may be coupled to the front coupling portion MPa and the rear coupling portion MPb of the first middle plate MP1, respectively. The second and third coupling portions FEb, FEc, RRb, and RRc of the front end plate FE and the rear reinforcement plate RR may be coupled to first and second side plates SP1 and SP2 that extend between the second and third coupling portions FEb, FEc, RRb, and RRc. As described below, each of the first and second side plates SP1 and SP2 may include a first coupling portion SPa formed at a central position in the first direction Z1 and second and third coupling portions SPb and SPc formed at front and rear positions. The front end plate FE and the rear reinforcement plate RR may be coupled to the second coupling portions SPb and the first coupling portions SPa of the first and second side plates SP1 and SP2, respectively.

In embodiments of the present disclosure, the first and second cell stacks S1 and S2, which are adjacent to each other in the second direction Z2, may be arranged in first and second regions, respectively, which are partitioned between different plates, such as the front end plate FE located on the front sides of the first and second cell stacks S1 and S2, the rear reinforcement plate RR located on the rear sides of the first and second cell stacks S1 and S2, and the first middle plate MP1 extending between the first and second cell stacks S1 and S2. Throughout this specification, a component for partitioning unit regions (e.g., first and second regions) in which unit cell stacks (e.g., the first and second cell stacks S1 and S2) are arranged may be referred to as a plate. The first and second regions may be open on the sides opposite the first middle plate MP1, and side surfaces of the first and second cell stacks S1 and S2 on the side opposite the first middle plate MP1 might not be partitioned by the plate and may be exposed to the outside of the battery pack. As described below, the first and second side plates SP1 and SP2 may be arranged on the side surfaces of the first and second cell stacks S1 and S2, which are on the sides opposite to the first middle plate MP1 and not partitioned by the plates, and the exposed side surfaces of the first and second cell stacks S1 and S2 may be covered by the first and second side plates SP1 and SP2, respectively. For example, the first and second side plates SP1 and SP2 may be coupled to the second and third coupling portions FEb, FEc, RRb, and RRc of the front end plate FE and the rear reinforcement plate RR, which protrude from the side surfaces of the first and second cell stacks S1 and S2.

In embodiments of the present disclosure, the first and second regions in which the first and second cell stacks S1 and S2 are arranged may be partitioned by coupling different plates to each other, such as the front end plate FE, the rear reinforcement plate RR, the first middle plate MP1 coupling the front end plate FE and the rear reinforcement plate RR to each other, and the first and second side plates SP1 and SP2, which are different from each other. In embodiments of the present disclosure, the unit regions in which the unit cell stacks (e.g., the first and second cell stacks S1 and S2) are arranged may be partitioned by coupling different plates to each other. To physically bind the plurality of battery cells 10 arranged in the first direction Z1 to each other, the unit regions (e.g., the first and second regions) in which the unit cell stacks (e.g., the first and second cell stacks S1 and S2) are arranged may be surrounded (e.g., surrounded along their peripheries) by different plates and may be partitioned by coupling the different plates to each other. For example, in embodiments of the present disclosure, the front and rear surfaces of the first and second cell stacks S1 and S2, which face in the first direction Z1, and two side surfaces of the first and second cell stacks S1 and S2, which face each other in the second direction Z2, may be surrounded by different plates that extend in the first and second directions Z1 and Z2 and are coupled to each other to surround the first and second cell stacks S1 and S2.

In embodiments of the present disclosure, the front end plate FE and the rear reinforcement plate RR may cover the front and rear surfaces of the first and second cell stacks S1 and S2, and the two side surfaces of the first cell stack S1 other than the front and rear surfaces thereof may be respectively surrounded by the first middle plate MP1 and the first side plate SP1. Also, the front and rear surfaces of the second cell stack S2 may be surrounded by the front end plate FE and the rear reinforcement plate RR, respectively, similar to the front and rear surfaces of the first cell stack S1. The two side surfaces of the second cell stack S2 other than the front and rear surfaces thereof may be respectively surrounded by the first middle plate MP1 and the second side plate SP2.

In embodiments of the present disclosure, each of the first and second cell stacks S1 and S2 may have the front and rear surfaces facing in the first direction Z1 and the two side surfaces facing each other in the second direction Z2. Also, the front surface, rear surface, and two side surfaces of each of the first and second cell stacks S1 and S2 may correspond to the front surface, rear surface, and two side surfaces of each of the battery cells 10 that constitute the respective first and second cell stacks S1 and S2. In embodiments of the present disclosure, the first and second cell stacks S1 and S2 or the battery cells 10 forming the first and second cell stacks S1 and S2 may have upper and lower surfaces facing in the third direction Z3, other than the front, rear, and two side surfaces forming the perimeters of the battery cells 10 and facing in the first and second directions Z1 and Z2. The upper and lower surfaces of the first and second cell stacks S1 and S2, or the battery cells 10 forming the first and second cell stacks S1 and S2, may be surrounded by separate members. In embodiments of the present disclosure, the first and second cell stacks S1 and S2, or the battery cells 10 forming the first and second cell stacks S1 and S2, may be arranged in the first and second regions partitioned by the plates that surround the front, rear, and two side surfaces of (e.g., the surfaces corresponding to the perimeters of) the first and second cell stacks S1 and S2 or the battery cells 10 forming the first and second cell stacks S1 and S2 on a plane formed by the first and second directions Z1 and Z2.

In embodiments of the present disclosure, the battery pack may include third and fourth cell stacks S3 and S4, which are respectively arranged on the rear side of the first and second cell stacks S1 and S2, and each include battery cells 10 arranged forward and rearward in the first direction Z1. The battery pack may also include a second middle plate MP2, which extends in the first direction Z1 between the third and fourth cell stacks S3 and S4, which are adjacent to each other in the second direction Z2, a front reinforcement plate FR, which is coupled to a front coupling portion MPa of the second middle plate MP2 in the first direction Z1 and covers the front sides of the third and fourth cell stacks S3 and S4, and a rear end plate RE, which is coupled to a rear coupling portion MPb of the second middle plate MP2 and covers the rear sides of the third and fourth cell stacks S3 and S4.

In embodiments of the present disclosure, the front reinforcement plate FR and the rear end plate RE may have first coupling portions FRa and REa, respectively, which are coupled to the front coupling portion MPa and the rear coupling portion MPb of the second middle plate MP2, respectively. In embodiments of the present disclosure, the front coupling portion MPa of the second middle plate MP2 and the first coupling portion FRa of the front reinforcement plate FR may be welded together while overlapping each other. Similarly, the rear coupling portion MPb of the second middle plate MP2 and the first coupling portion REa of the rear end plate RE may be welded together while overlapping each other. In embodiments of the present disclosure, the second middle plate MP2 may extend between the third and fourth cell stacks S3 and S4. Therefore, the first coupling portions FRa and REa of the front reinforcement plate FR and the rear end plate RE, which are respectively coupled to the front coupling portion MPa and the rear coupling portion MPb of the second middle plate MP2, may be respectively formed at the centers of the front reinforcement plate FR and the rear end plate RE, each of which extends in the second direction Z2. The front reinforcement plate FR and the rear end plate RE may extend in the second direction Z2 and may respectively have the first coupling portions FRa and REa formed at central positions thereof in the second direction Z2 and second and third coupling portions FRb, FRc, REb, and REc formed at both ends (e.g., opposite ends) thereof in the second direction Z2. The first coupling portions FRa and REa of the front reinforcement plate FR and the rear end plate RE may be coupled to the front coupling portion MPa and the rear coupling portion MPb of the second middle plate MP2, respectively. The second and third coupling portions FRb, FRc, REb, and REc of the front reinforcement plate FR and the rear end plate RE may be coupled to the first and second side plates SP1 and SP2 that extend between the second and third coupling portions FRb, FRc, REb, and REc. As described below, each of the first and second side plates SP1 and SP2 may include the first coupling portion SPa formed at the central position in the first direction Z1 and the second and third coupling portions SPb and SPc formed at front and rear positions in the first direction Z1. The front reinforcement plate FR and the rear end plate RE may be coupled to the first coupling portions SPa and the third coupling portions SPc of the first and second side plates SP1 and SP2, respectively.

In embodiments of the present disclosure, the third and fourth cell stacks S3 and S4, which are adjacent to each other in the second direction Z2, may be arranged in third and fourth regions, respectively, which are partitioned between different plates, such as the front reinforcement plate FR located on the front sides of the third and fourth cell stacks S3 and S4, the rear end plate RE located on the rear sides of the third and fourth cell stacks S3 and S4, and the second middle plate MP2 extending between the third and fourth cell stacks S3 and S4. The third and fourth regions may be open on the sides opposite the second middle plate MP2, and side surfaces of the third and fourth cell stacks S3 and S4 on the side opposite the second middle plate MP2 might not be partitioned by the plate and may be exposed to the outside of the battery pack. The first and second side plates SP1 and SP2 may be arranged on the side surfaces of the third and fourth cell stacks S3 and S4, which are on the sides opposite to the second middle plate MP2 and are not partitioned by the plates, and the exposed side surfaces of the third and fourth cell stacks S3 and S4 may be covered by the first and second side plates SP1 and SP2, respectively. For example, the first and second side plates SP1 and SP2 may be coupled to the second and third coupling portions FRb, FRc, REb, and REc of the front reinforcement plate FR and the rear end plate RE, which protrude from the side surfaces of the third and fourth cell stacks S3 and S4.

In embodiments of the present disclosure, the third and fourth regions, in which the third and fourth cell stacks S3 and S4 are arranged, may be partitioned by coupling different plates to each other, such as the front reinforcement plate FR, the rear end plate RE, the second middle plate MP2 coupling the front reinforcement plate FR and the rear end plate RE to each other, and the first and second side plates SP1 and SP2, which are different from each other. In embodiments of the present disclosure, the unit regions (e.g., the third and fourth regions) in which the unit cell stacks (e.g., the third and fourth cell stacks S3 and S4) are arranged may be partitioned by coupling different plates to each other. To physically bind the plurality of battery cells 10 arranged in the first direction Z1 to each other, the unit regions (e.g., the third and fourth regions) in which the unit cell stacks (e.g., the third and fourth cell stacks S3 and S4) are arranged may be surrounded by different plates and may be partitioned by coupling the different plates to each other. For example, in embodiments of the present disclosure, the front and rear surfaces of the third and fourth cell stacks S3 and S4, which face in the first direction Z1, and two side surfaces of the third and fourth cell stacks S3 and S4, which face each other in the second direction Z2, may be surrounded by different plates that extend in the first and second directions Z1 and Z2 and are coupled to each other to surround the third and fourth cell stacks S3 and S4.

In embodiments of the present disclosure, the front reinforcement plate FR and the rear end plate RE may cover the front and rear surfaces of the third and fourth cell stacks S3 and S4, and the two side surfaces of the third cell stack S3 other than the front and rear surfaces thereof may be respectively surrounded by (or covered by) the second middle plate MP2 and the first side plate SP1. Also, the front and rear surfaces of the fourth cell stack S4 may be surrounded by the front reinforcement plate FR and the rear end plate RE, respectively, similar to the front and rear surfaces of the third cell stack S3. The two side surfaces of the fourth cell stack S4 other than the front and rear surfaces thereof may be respectively surrounded by the second middle plate MP2 and the second side plate SP2.

In embodiments of the present disclosure, each of the third and fourth cell stacks S3 and S4 may have the front and rear surfaces facing in the first direction Z1 and the two side surfaces facing each other in the second direction Z2. Also, the front surface, rear surface, and two side surfaces of each of the third and fourth cell stacks S3 and S4 may correspond to the front surface, rear surface, and two side surfaces of each of the battery cells 10 that constitute the third and fourth cell stacks S3 and S4. In embodiments of the present disclosure, the third and fourth cell stacks S3 and S4, or the battery cells 10 forming the third and fourth cell stacks S3 and S4, may have upper and lower surfaces facing in the third direction Z3, other than the front, rear, and two side surfaces forming the perimeters of the battery cells 10 in the first and second directions Z1 and Z2. The upper and lower surfaces of the third and fourth cell stacks S3 and S4 or the battery cells 10 forming the third and fourth cell stacks S3 and S4 may be surrounded by separate members. In embodiments of the present disclosure, the third and fourth cell stacks S3 and S4 or the battery cells 10 forming the third and fourth cell stacks S3 and S4 may be arranged in the third and fourth regions partitioned by the plates that surround the front, rear, two side surfaces, for example, the surfaces corresponding to the perimeters of the third and fourth cell stacks S3 and S4 or the battery cells 10 forming the third and fourth cell stacks S3 and S4 on a plane formed by the first and second directions Z1 and Z2. In embodiments of the present disclosure, the unit cell stacks including the first to fourth cell stacks S1, S2, S3, and S4 may be arranged in unit regions including the first to fourth regions.

In embodiments of the present disclosure, the rear reinforcement plate RR, covering the rear side of the first and second cell stacks S1 and S2 adjacent to each other in the second direction Z2, and the front reinforcement plate FR, covering the front side of the third and fourth cell stacks S3 and S4 adjacent to each other in the second direction Z2, may be arranged facing each other. The rear reinforcement plate RR and the front reinforcement plate FR may be arranged directly facing each other and may directly face each other without any component therebetween. The rear reinforcement plate RR and the front reinforcement plate FR may be arranged to face each other. The second coupling portions RRb and FRb of the rear reinforcement plate RR and the front reinforcement plate FR, which protrude from the exposed side surfaces of the first and third cell stacks S1 and S3 arranged in the first direction Z1, for example, the exposed side surfaces of the first and third cell stacks S1 and S3 on the sides opposite the first and second middle plates MP1 and MP2, may be coupled to the first side plate SP1 (e.g., the first coupling portion SPa of the first side plate SP1) extending between the second coupling portions RRb and FRb. Similarly, the third coupling portions RRc and FRc of the rear reinforcement plate RR and the front reinforcement plate FR, which protrude from the exposed side surfaces of the second and fourth cell stacks S2 and S4 arranged in the first direction Z1, for example, the exposed side surfaces of the second and fourth cell stacks S2 and S4 on the sides opposite the first and second middle plates MP1 and MP2, may be coupled to the second side plate SP2 extending between the third coupling portions RRc and FRc.

In embodiments of the present disclosure, the battery pack may further include the first side plate SP1, which is provided on side surfaces of the first and third cell stacks S1 and S3 on the side opposite the first and second middle plates MP1 and MP2 and extends in the first direction Z1 across the side surfaces of the first and third cell stacks S1 and S3 arranged in the first direction Z1, and the second side plate SP2, which is provided on side surfaces of the second and fourth cell stacks S2 and S4 on the side opposite the first and second middle plates MP1 and MP2 and extends in the first direction Z1 across the side surfaces of the second and fourth cell stacks S2 and S4 arranged in the first direction Z1. Each of the first and second side plates SP1 and SP2 may include the first coupling portion SPa at the central position and the second and third coupling portions SPb and SPc at both ends thereof in the first direction Z1.

The first side plate SP1 may be coupled to the second coupling portions FEb, RRb, FRb, and REb of the front end plate FE, the rear reinforcement plate RR, the front reinforcement plate FR, and the rear end plate RE, respectively, which are exposed from the side surfaces of the first and third cell stacks S1 and S3. Similarly, the second side plate SP2 may be coupled to the third coupling portions FEc, RRc, FRc, and REc of the front end plate FE, the rear reinforcement plate RR, the front reinforcement plate FR, and the rear end plate RE, respectively, which are exposed from the side surfaces of the second and fourth cell stacks S2 and S4 arranged in the first direction Z1. In embodiments of the present disclosure, the first and second side plates SP1 and SP2 may be arranged at opposite ends of the battery pack in the second direction Z2. In more detail, the first and second side plates SP1 and SP2 may be arranged on the side surfaces of the first and third cell stacks S1 and S3 and the side surfaces of the second and fourth cell stacks S2 and S4, respectively, on the sides opposite the first and second middle plates MP1 and MP2.

As described above, the first and second side plates SP1 and SP2 may extend across the side surfaces of the first and third cell stacks S1 and S3 and the side surfaces of the second and fourth cell stacks S2 and S4, respectively. The first and second side plates SP1 and SP2 may extend in the first direction Z1 across the second and third coupling portions FEb, RRb, FRb, REb, FEc, RRc, FRc, and REc which are formed at both ends of the front end plate FE, the rear reinforcement plate RR, the front reinforcement plate FR, and the rear end plate RE, and may include the first to third coupling portions SPa, SPb, and SPc, which are coupled to the second and third coupling portions FEb, RRb, FRb, REb, FEc, RRc, FRc, and REc. In embodiments of the present disclosure, the first and second side plates SP1 and SP2 (or collectively referred to as the side plates SP1 and SP2) may include the first coupling portions SPa formed at the central positions thereof in the first direction Z1 and the second and third coupling portions SPb and SPc formed at both ends thereof. The first coupling portions SPa formed at the central positions of the side plates SP1 and SP2 may be coupled to the second and third coupling portions RRb, RRc, FRb, and FRc of the rear reinforcement plate RR and the front reinforcement plate FR, which are formed at the central positions of the battery pack in the first direction Z1. The second and third coupling portions SPb and SPc formed at both ends (e.g., opposite ends) of the side plates SP1 and SP2 may be coupled to the second and third coupling portions FEb, FEc, REb, and REc of the front end plate FE and the rear end plate RE, which are formed at both ends of the battery pack in the first direction Z1.

In embodiments of the present disclosure, the first coupling portions SPa formed at the central positions of the side plates SP1 and SP2 may be coupled to the second and third coupling portions RRb, RRc, FRb, and FRc of the rear reinforcement plate RR and the front reinforcement plate FR, which are arranged in the first direction Z1 and overlap each other (or are adjacent to each other) at the central positions of the battery pack. For example, the first coupling portions SPa of the side plates SP1 and SP2 and the second and third coupling portions RRb, RRc, FRb, and FRc of the rear reinforcement plate RR and the front reinforcement plate FR may be welded and coupled to each other. For example, in embodiments of the present disclosure, the second and third coupling portions RRb, RRc, FRb, and FRc of the rear and front reinforcement plates RR and FR (or collectively referred to as the reinforcement plates RR and FR) may overlap each other in the first direction Z1, and the first coupling portion SPa of the side plates SP1 and SP2 may be attached, in the second direction Z2, to the second and third coupling portions RRb, RRc, FRb, and FRc, which overlap each other. In the coupling portions therebetween, three different members may be coupled to each other, and two different members overlap each other in the second direction Z2 corresponding to a welding direction (or a heat input direction). However, three different members may not overlap each other in the second direction Z2 corresponding to the welding direction. For example, in the second direction Z2, the rear reinforcement plate RR may overlap the side plates SP1 and SP2 at one place, and the front reinforcement plate FR may overlap the side plates SP1 and SP2 at another place (e.g., at an adjacent area). Three members of the front reinforcement plate FR, the rear reinforcement plate RR, and the side plates SP1 and SP2 may not overlap each other in the second direction Z2 corresponding to the welding direction. In embodiments of the present disclosure, while three different members are welded to each other, two different members may overlap each other in the second direction Z2 corresponding to the welding direction. Therefore, it is possible to prevent deterioration of welding strength due to an insufficient input of welding heat caused by the overlap of three different members in the welding direction (heat input direction). For example, in embodiments of the present disclosure, the second and third coupling portions RRb, RRc, FRb, and FRc of the reinforcement plates RR and FR may be coupled to each other via the first coupling portions SPa of the side plates SP1 and SP2, and the second and third coupling portions RRb, RRc, FRb, and FRc of the reinforcement plates RR and FR may not be directly coupled to each other. In embodiments of the present disclosure, the second and third coupling portions RRb, RRc, FRb, and FRc of the reinforcement plates RR and FR may be coupled to each other via the first coupling portions SPa of the side plates SP1 and SP2. Therefore, a welding line W (see, e.g., FIG. 5) between the second and third coupling portions RRb, RRc, FRb, and FRc of the reinforcement plates RR and FR and the first coupling portions SPa of the side plates SP1 and SP2 may include a first welding line W1 respectively coupling the second coupling portion RRb and the third coupling portion RRc of the rear reinforcement plate RR and the first coupling portions SPa of the side plates SP1 and SP2 to each other, a second coupling line W2 extending from the second coupling portion RRb (or the third coupling portion RRc) of the rear reinforcement plate RR to the second coupling portion FRb (or the third coupling portion FRc) of the front reinforcement plate FR, and a third welding line W3 respectively coupling the second coupling portion FRb and the third coupling portion FRc of the front reinforcement plate FR and the first coupling portions SPa of the side plates SP1 and SP2 to each other. The welding line W may include the first and third welding lines W1 and W3 extending in a third direction Z3 parallel to the reinforcement plates RR and FR welded on the side plates SP1 and SP2, for example, the third direction Z3 crossing the first and second directions Z1 and Z2, and the second welding line W2 extending in the first direction Z1 in which the rear reinforcement plate RR and the front reinforcement plate FR overlap each other. As described above, the welding line W, which includes the first and third welding lines W1 and W3 extending in the third direction Z3 and the second welding line W2 extending in the first direction Z1 between the first and third welding lines W1 and W3, may have a U-shape overall and may have rounded corners or sharp corners.

In embodiments of the present disclosure, the coupling between different plates coupled to surround each of the unit regions in which each of unit cell stacks (e.g., the first to fourth cell stacks S1, S2, S3, and S4) is located may include the coupling between the front and rear end plates FE and RE (or collectively referred to as the end plates FE and RE) or the rear and front reinforcement plates RR and FR (or collectively referred to as the reinforcement plates RR and FR) and the first and second middle plates MP1 and MP2 (or collectively referred to as the middle plates MP1 and MP2) and the coupling between the end plates FE and RE or the reinforcement plates RR and FR and the side plates SP1 and SP2. In embodiments of the present disclosure, the plates extending in the first direction Z1 may include the side plates SP1 and SP2 and the middle plates MP1 and MP2, and the plates extending in the second direction Z2 may include the end plates FE and RE and the reinforcement plates RR and FR. Therefore, it is possible to couple the plates extending in the first and second directions Z1 and Z2 that are different from each other.

As described above, the coupling between the reinforcement plates RR and FR and the side plates SP1 and SP2 may include the welding of three different plates including the rear reinforcement plate RR, the front reinforcement plate FR, and the side plates SP1 and SP2 while two different members are welded to each other while overlapping each other in the welding direction (heat input direction). For example, rather than being directly welded to each other while overlapping in the second direction Z2 corresponding to the welding direction, the rear reinforcement plate RR and the front reinforcement plate FR may be coupled to each other via the first coupling portions SPa of the side plates SP1 and SP2. In embodiments of the present disclosure, at welding places other than the welding places between the rear and front reinforcement plates RR and FR and the side plates SP1 and SP2, two different members to be coupled may overlap each other in the welding direction (heat input direction). At the welding places other than the welding places between the rear and front reinforcement plates RR and FR and the side plates SP1 and SP2, two different members may be coupled to each other, but three different members may not be coupled to each other.

In embodiments of the present disclosure, the plates extending in the first direction Z1 may include the side plates SP1 and SP2 and the middle plates MP1 and MP2, and the first to third coupling portions SPa, SPb, and SPc may be formed at the center and both ends of each of the side plates SP1 and SP2 in the first direction Z1. For example, the first coupling portion SPa of each of the side plates SP1 and SP2 may be recessed toward the inside of each of the side plates SP1 and SP2 in the second direction Z2 and, thus, may have a relatively small thickness. For example, the first coupling portion SPa may have a thin-plate thickness through insert injection molding, and thus, it is possible to prevent a decrease in coupling stiffness due to an insufficient input of welding heat. The first coupling portion SPa of each of the side plates SP1 and SP2 may be formed to have a height lower than that of (the other portions of) the side plates SP1 and SP2 due to a cut-out portion C formed at the central position of each of the side plates SP1 and SP2 in the first direction Z1. For example, the first coupling portion SPa may be formed at a lower position of each of the side plates SP1 and SP2 in the third direction Z3. The cut-out portion C recessed downwardly in the third direction Z3 may be formed above the first coupling portion SPa, and the first coupling portions SPa may be respectively formed at lower positions of the side plates SP1 and SP2.

The side plates SP1 and SP2 may include plates that entirely surround the battery pack and may have heights sufficient to cover the battery cells 10 forming the battery pack. To the extent that the first coupling portion SPa provides a sufficient welding area between the side plates SP1 and SP2 and the reinforcement plates RR and FR, the first coupling portion SPa may have a height less than that of each of the side plates SP1 and SP2. Taking into consideration that a welding position may be visually checked via the cut-out portion C formed in each of the side plates SP1 and SP2, for example, the cut-out portion C formed above the first coupling portion SPa, the first coupling portion SPa may be at a height lower than that of each of the side plates SP1 and SP2. The first coupling portions SPa may be formed to have heights lower than those of the side plates SP1 and SP2 due to the formation of the cut-out portions C.

The second and third coupling portions SPb and SPc of each of the side plates SP1 and SP2 may be coupled to the end plates FE and RE, respectively. The second and third coupling portions SPb and SPc of each of the side plates SP1 and SP2 may have relatively small thicknesses, similar to the first coupling portion SPa. The second and third coupling portions SPb and SPc have shapes bent in the second direction Z2 to surround (or to extend around) corners (e.g., the second and third coupling portions FEb, FEc, REb, and REc) of the end plates FE and RE, which are to be respectively coupled to the second and third coupling portions SPb and SPc. For example, the second and third coupling portions SPb and SPc of the side plates SP1 and SP2 may be welded on the corners (e.g., the second and third coupling portions FEb, FEc, REb, and REc) of the front end plate FE and the rear end plate RE while surrounding the corners (e.g., the second and third coupling portions FEb, FEc, REb, and REc). The second and third coupling portions SPb and SPc of the side plates SP1 and SP2 may bend in the second direction Z2, which is the surface direction of the end plates FE and RE and may surround the second and third coupling portions FEb, FEc, REb, and REc, which are formed at lower positions of the corners of the end plates FE and RE from both ends of the side plates SP1 and SP2. In embodiments of the present disclosure, rather than entirely surrounding the corners of the end plates FE and RE, the second and third coupling portions SPb and SPc of the side plates SP1 and SP2 may extend to partially surround the corners thereof, for example, they may surround the lower portions (e.g., the second and third coupling portions FEb, FEc, REb, and REc) of the corners of the end plates FE and RE in the third direction Z3. The second and third coupling portions SPb and SPc of the side plates SP1 and SP2 may have lengths sufficient for welding between the side plates SP1 and SP2 and the end plates FE and RE and may protect electrode terminals formed on the upper surfaces of the battery cells 10 and components electrically connected thereto against the welding heat input between the side plates SP1 and SP2 (e.g., the second and third coupling portions SPb and SPc) and the end plates FE and RE (e.g., the second and third coupling portions FEb, FEc, REb, and REc). The side plates SP1 and SP2 and the end plates FE and RE, which are coupled to each other, may include plates that entirely surround the battery pack and have sufficient heights in the third direction Z3 to sufficiently cover the battery cells 10 forming the battery pack. However, to the extent that the second and third coupling portions SPb, SPc, FEb, FEc, REb, and REc between the side plates SP1 and SP2 and the end plates FE and RE provide sufficient coupling areas, the second and third coupling portions SPb, SPc, FEb, FEc, REb, and REc may have heights lower than those of the side plates SP1 and SP2 and the end plates FE and RE. Throughout this specification, the side plates SP1 and SP2 and the end plates FE and RE may include second and third coupling portions SPb, SPc, FEb, FEc, REb, and REc, respectively. However, in relation to the second and third coupling portions SPb, SPc, FEb, FEc, REb, and REc, the side plates SP1 and SP2 and the end plates FE and RE may refer to main bodies of the side plates SP1 and SP2 and the end plates FE and RE other than the second and third coupling portions SPb, SPc, FEb, FEc, REb, and REc.

The first and second middle plates MP1 and MP2 extending in the first direction Z1 may include the front coupling portions MPa and the rear coupling portions MPb formed at both ends thereof in the first direction Z1. The first and second middle plates MP1 and MP2 may be coupled to the front end plate FE and the rear reinforcement plate RR and coupled to the front reinforcement plate FR and the rear end plate RE, respectively, via the front coupling portions MPa and the rear coupling portions MPb. In embodiments of the present disclosure, the front coupling portions MPa and the rear coupling portions MPb of the middle plates MP1 and MP2 may protrude in the second direction Z2 crossing the first direction Z1 in which the middle plates MP1 and MP2 extend. The front coupling portions MPa and the rear coupling portions MPb may protrude in the second direction Z2 from both ends of the middle plates MP1 and MP2 in the first direction Z1 and may allow for the formation of relatively wide weld coupling. The front coupling portions MPa and the rear coupling portions MPb of the middle plates MP1 and MP2 may extend in the second direction Z2 symmetrically from balanced positions with respect to thin plate thicknesses of the middle plates MP1 and MP2 and may form relatively wide welding areas with the first coupling portions FEa, REa, RRa, and FRa of the end plates FE and RE and the reinforcement plates RR and FR.

The front coupling portions MPa and the rear coupling portions MPb of the middle plates MP1 and MP2 protrude in the second direction Z2 at both ends of the middle plates MP1 and MP2 such that the front coupling portions MPa and the rear coupling portions MPb have relatively greater thicknesses than the thin plate thicknesses of the middle plates MP1 and MP2 in the second direction Z2. The front coupling portions MPa and the rear coupling portions MPb may extend in the third direction Z3 such that the front coupling portions MPa and the rear coupling portions MPb have relatively lower heights than (e.g., are shorter than) the height of the middle plates MP1 and MP2 in the third direction Z3. Throughout this specification, the middle plates MP1 and MP2 may include the front coupling portions MPa and the rear coupling portions MPb formed at both ends thereof. However, in relation to the front coupling portions MPa and the rear coupling portions MPb, the middle plates MP1 and MP2 may refer to main bodies of the middle plates MP1 and MP2 other than the front coupling portions MPa and the rear coupling portions MPb. For example, in embodiments of the present disclosure, the front coupling portions MPa and the rear coupling portions MPb may have grater thicknesses in the second direction Z2 and lower heights in the third direction Z3 than the middle plates MP1 and MP2. The middle plates MP1 and MP2 may be placed between the battery cells 10 adjacent to each other in the first direction Z1 to provide internal pressure in the longitudinal direction between the adjacent battery cells 10 and may fix the positions of the battery cells 10 adjacent to each other. Therefore, the middle plates MP1 and MP2 may have heights equal to that of the battery cells 10 in the third direction Z3. On the other hand, the front coupling portions MPa and the rear coupling portions MPb of the middle plates MP1 and MP2 may have heights lower than that of the middle plates MP1 and MP2 to the extent they provide sufficient welding areas.

In embodiments of the present disclosure, the plates extending in the second direction Z2 may include the end plates FE and RE and the reinforcement plates RR and FR. The end plates FE and RE and the reinforcement plates RR and FR may include the first coupling portions FEa, REa, RRa, and FRa formed at the central positions thereof in the second direction Z2 and the second and third coupling portions FEb, FEc, REb, REc, RRb, RRc, FRb, and FRc formed at both ends thereof in the second direction Z2. The first coupling portions FEa, REa, RRa, and FRa of the end plates FE and RE and the reinforcement plates RR and FR may be recessed toward the inside of the end plates FE and RE and the reinforcement plates RR and FR in the first direction Z1 for coupling with the front coupling portions MPa and the rear coupling portions MPb of the middle plates MP1 and MP2 in the first direction Z1 and may have relatively small thicknesses to prevent a decrease in coupling rigidity due to a lack of welding input heat.

The end plates FE and RE may include plates entirely surrounding the battery pack and may have relatively high heights sufficient to cover the battery cells 10 in the third direction Z3, which crosses the first and second directions Z1 and Z2, so that the end plates FE and RE may cover the battery cells 10 forming the battery pack. The reinforcement plates RR and FR may include plates provided inside the battery pack to reinforce the rigidity of the battery pack and may not need to cover the battery cell 10, different from the end plates FE and RE. Therefore, to reinforce the strength of the battery pack, the reinforcement plates RR and FR may have heights lower than that of the end plates FE and RE. Rather, because the reinforcement plates RR and FR have lower heights than the end plates FE and RE, workability of the battery cells 10, such as welding of electrode terminals to the battery cells 10 exposed by the reinforcement plates RR and FR, may be improved. The first coupling portions RRa and FRa formed at the central positions of the reinforcement plates RR and FR may have heights higher than that of the reinforcement plates RR and FR in the third direction Z3. The first coupling portions RRa and FRa may have heights higher than that of the reinforcement plates RR and FR in the third direction Z3 so that the first coupling portions RRa and FRa form sufficient welding areas with the front coupling portions MPa and the rear coupling portions MPb formed at both ends of the middle plates MP1 and MP2. Throughout this specification, the reinforcement plates RR and FR may include the first coupling portions RRa and FRa. However, in relation to the first coupling portions RRa and FRa, the reinforcement plates RR and FR may refer to main bodies of the reinforcement plates RR and FR other than the first coupling portions RRa and FRa. For example, the first coupling portions RRa and FRa may have heights higher than that of the reinforcement plates RR and FR, and thus, the first coupling portions RRa and FRa may locally protrude from the central positions of the reinforcement plates RR and FR. The second and third coupling portions FEb, FEc, REb, and REc of the end plates FE and RE may be coupled to the second and third coupling portions SPb and SPc of the side plates SP1 and SP2, and the second and third coupling portions RRb, RRc, FRb, and FRc of the reinforcement plates RR and FR may be coupled to the first coupling portions SPa of the side plates SP1 and SP2. In embodiments of the present disclosure, the end plates FE and RE may have wide upper portions having relatively wide widths and narrow lower portions having relatively narrow widths in the second direction Z2. The wide upper portions may protect electrode terminals of the battery cells 10 at the upper positions adjacent to the electrode terminals of the battery cells 10 and may protect the electrode terminals of the battery cells 10 from being welded to the second and third coupling portions FEb and FEc formed on the narrow lower portions.

In embodiments of the present disclosure, the plates forming the overall appearance of the battery pack, for example, the end plates FE and RE and the side plates SP1 and SP2, entirely surround the battery pack to contain all of the first to fourth cell stacks S1, S2, S3, and S4 forming the battery pack and may also physically bind the unit cell stacks (e.g., the first to fourth cell stacks S1, S2, S3, and S4) forming the entire battery pack or the battery cells 10 forming the unit cell stacks to each other. The plates formed inside the battery pack and crossing between the adjacent unit cell stacks may supplement (e.g., may improve) the rigidity of the battery pack. For example, the first and second middle plates MP1 and MP2, which respectively extend between the first and second cell stacks S1 and S2 and between the third and fourth cell stacks S3 and S4, may reinforce the rigidity of the battery pack. For example, the first and second middle plates MP1 and MP2 may reinforce the rigidity of the battery pack and may provide physical rigidity against external impact, such as bending or twisting of the battery pack. For example, the rear reinforcement plate RR and the front reinforcement plate FR, which extend between the first and third cell stacks S1 and S3 and between the second and fourth cell stacks S2 and S4, may be formed inside the battery pack and may reinforce the rigidity of the battery pack.

In embodiments of the present disclosure, different from how the plurality of plates for partitioning the unit regions in which the unit cell stacks (e.g., the first to fourth cell stacks S1, S2, S3, and S4) are arranged, the rear reinforcement plate RR and the front reinforcement plate FR may overlap each other in the first direction Z1 and may overlap each other to directly face each other in the first direction Z1. When the reinforcement plates RR and FR supplement the rigidity of the battery pack, a single member of the same thickness may be formed instead of overlapping the two different members, for example, the rear reinforcement plate RR and the front reinforcement plate FR, which allows for relative motion therebetween. However, in embodiments of the present disclosure, the structure in which the rear reinforcement plate RR and the front reinforcement plate FR overlap each other in the first direction Z1 as different plates, may be preferred in terms of extendability of the battery pack. For example, in embodiments of the present disclosure, modules M1 and M2 (or collectively referred to as first and second modules M1 and M2) may include the end plates FE and RE and the reinforcement plates RR and FR arranged facing each other with the unit regions therebetween in the first direction Z1 and the middle plates MP1 and MP2 extending between different unit regions arranged in the second direction Z2. Because the modules M1 and M2 are repeatedly arranged in the first direction Z1, a battery pack in an extended form including a plurality of modules M1 and M2 in the first direction Z1 may be provided. A battery pack including a desired number of modules M1 and M2 may be adaptively provided in consideration of electrical outputs and capacities necessary for different consumers. For example, in embodiments of the present disclosure, the modules M1 and M2 respectively including the reinforcement plates RR and FR may be arranged repeatedly in the first direction Z1. Therefore, the reinforcement plate (e.g., the rear reinforcement plate RR) of the first module M1 preceding in the first direction Z1 and the reinforcement plate (e.g., the front reinforcement plate FR) of the second module M2 following in the first direction Z1 may overlap each other, and thus, the overall structure of the battery pack may have a structure in which the reinforcement plates RR and FR overlap each other (e.g., are directly adjacent to each other). In embodiments of the present disclosure, the desired number of modules M1 and M2 may be arranged in the first direction Z1 to extend the battery pack. A battery pack having extendability may be provided by extending and contracting the length of the side plates SP1 and SP2 as necessary to entirely bind the battery pack including the plurality of modules M1 and M2.

In embodiments of the present disclosure, the end plates FE and RE and the side plates SP1 and SP2 completely surround the battery pack. They may extend along the entire length of the battery pack in the first direction Z1 and along the entire width of the battery pack in the second direction Z2, and may be formed along the entire height of the battery pack in the third direction Z3 crossing the first and second directions Z1 and Z2. Also, the end plates FE and RE and the side plates SP1 and SP2 may prevent the cell stacks S1, S2, S3, and S4 forming the battery pack or the battery cells 10 forming the cell stacks S1, S2, S3, and S4 from being exposed along the perimeters (or periphery) of the battery pack in the first and second directions Z1 and Z2. For example, the first side plate SP1 may continuously cover (or entirely cover) the side surfaces of the first and third cell stacks S1 and S3 arranged in the first direction Z1, and the second side plate SP2 may continuously cover (or entirely cover) the side surfaces of the second and fourth cell stacks S2 and S4 arranged in the first direction Z1.

The middle plates MP1 and MP2 and the reinforcement plates RR and FR formed inside the battery pack might not be formed along the entire length of the battery pack in the first direction Z1 or the entire width of the battery pack in the second direction Z2. For example, in embodiments of the present disclosure, the reinforcement plates RR and FR may be formed along the entire width of the battery pack in the second direction Z2, but the middle plates MP1 and MP2 might not be formed along the entire length of the battery pack in the first direction Z1. For example, the reinforcement plates RR and FR and the middle plates MP1 and MP2 may be allowed to cross each other to extend in the second direction Z2 and the first direction Z1 inside the battery pack. In embodiments of the present disclosure, the reinforcement plates RR and FR, for example, each of the rear reinforcement plate RR and the front reinforcement plate FR, may be formed along the entire width of the battery pack between the first and second side plates SP1 and SP2 on both sides the reinforcement plates RR and FR. The first and second middle plates MP1 and MP2 may be disconnected from each other so that the reinforcement plates RR and FR are allowed to cross therebetween (or extend therebetween), and thus, each of the first and second middle plates MP1 and MP2 might not be formed along the entire length of the battery pack in the first direction Z1. For example, the first and second middle plates MP1 and MP2 may be spaced apart from each other in the first direction Z1 and may individually cover the side surfaces of the first and third cell stacks S1 and S3 arranged in the first direction Z1 or individually cover the side surfaces of the second and fourth cell stacks S2 and S4 arranged in the first direction Z1. Also, the rear reinforcement plate RR and the front reinforcement plate FR may extend in the second direction Z2 crossing the first direction Z1 in which the first and second middle plates MP1 and MP2 extend. The rear reinforcement plate RR and the front reinforcement plate FR may pass through a gap between the first and second middle plates MP1 and MP2 to continuously extend in the second direction Z2 to cross the direction in which the first and second middle plates MP1 and MP2 extend. For example, the rear reinforcement plate RR and the front reinforcement plate FR may extend between the first and second side plates SP1 and SP2 that form the entire width of the battery pack.

The side plates SP1 and SP2 and the first and second middle plates MP1 and MP2 extending in the first direction Z1 along the side surfaces of the battery cells 10 may include protrusions 50 and 60 (see, e.g., FIGS. 2 to 5) that protrude toward the side surfaces of the battery cells 10 adjacent to each other. The protrusions 50 and 60 may protrude from the side surfaces of the side plates SP1 and SP2 and the first and second middle plates MP1 and MP2 facing the battery cells 10, may protrude between the battery cells 10 adjacent to each other to be arranged between the battery cells 10 adjacent to each other, may form longitudinal internal pressure in the first direction Z1 while being arranged between the battery cells 10 adjacent to each other, and may firmly fix the positions of the battery cells 10 adjacent to each other. Therefore, the rigidity of the entire battery pack may be reinforced (or improved) by fixing the position of each of the battery cells 10. In embodiments of the present disclosure, the middle plates MP1 and MP2 may extend between the first and second cell stacks S1 and S2 adjacent to each other in the second direction Z2 or between the third and fourth cell stacks S3 and S4 adjacent to each other in the second direction Z2 and may include protrusions 50 that protrude from both sides thereof in the second direction Z2. Also, the side plates SP1 and SP2 may cover the side surfaces of the first and third cell stacks S1 and S3 or the side surfaces of the second and fourth cell stacks S2 and S4 and may include protrusions 60 that protrude from the inner surfaces of the side plates SP1 and SP2 that face the cell stacks S1, S2, S3, and S4 or the battery cells 10 forming the cell stacks S1, S2, S3, and S4. In embodiments of the present disclosure, a distance between adjacent protrusions 50 formed on the middle plates MP1 and MP2 in the first direction Z1 and a distance between adjacent protrusions 60 formed on the side plates SP1 and SP2 in the first direction Z1 may be substantially equal to each other.

In embodiments of the present disclosure, spacers 20 (see, e.g., FIGS. 3 and 4) may be provided between the plurality of battery cells 10 arranged in the first direction Z1. Each of the spacers 20 may be located between the battery cells 10 adjacent to each other in the first direction Z1 to prevent thermal or physical interference between the battery cells 10 adjacent to each other. For example, the spacer 20 may electrically and/or thermally insulate adjacent battery cells 10 from each other.

Referring to FIG. 2, sub side plates SS may be arranged between the side surfaces of the battery cells 10 and the side plates SP1 and SP2. In the first module M1 including the first and second cell stacks S1 and S2, the sub side plates SS may cover the first and second cell stacks S1 and S2 (e.g., the side surfaces of the battery cells 10) on the sides opposite the first middle plate MP1. Similarly, in the second module M2 including the third and fourth cell stacks S3 and S4, the sub side plates SS may cover the third and fourth cell stacks S3 and S4 (e.g., the side surfaces of the battery cells 10) on the sides opposite the second middle plate MP2. Therefore, even in module units, such as the first and second modules M1 and M2, the side surfaces of the battery cells 10 may not be exposed along the perimeters of each of the first and second modules M1 and M2, and thus, it may be easier to assemble the battery pack including the plurality of modules M1 and M2 by stacking each of the modules M1 and M2.

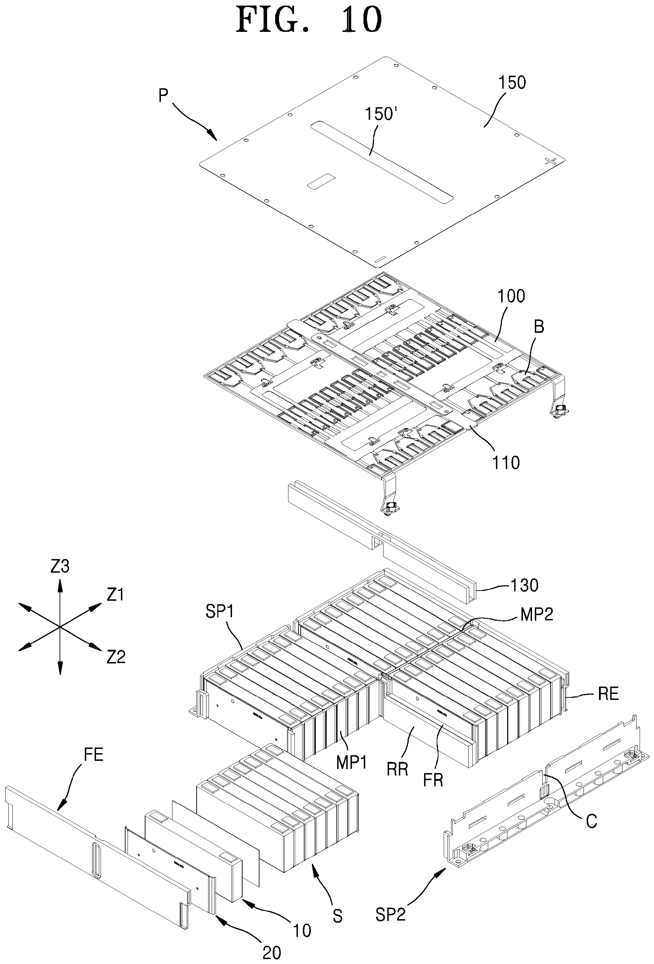

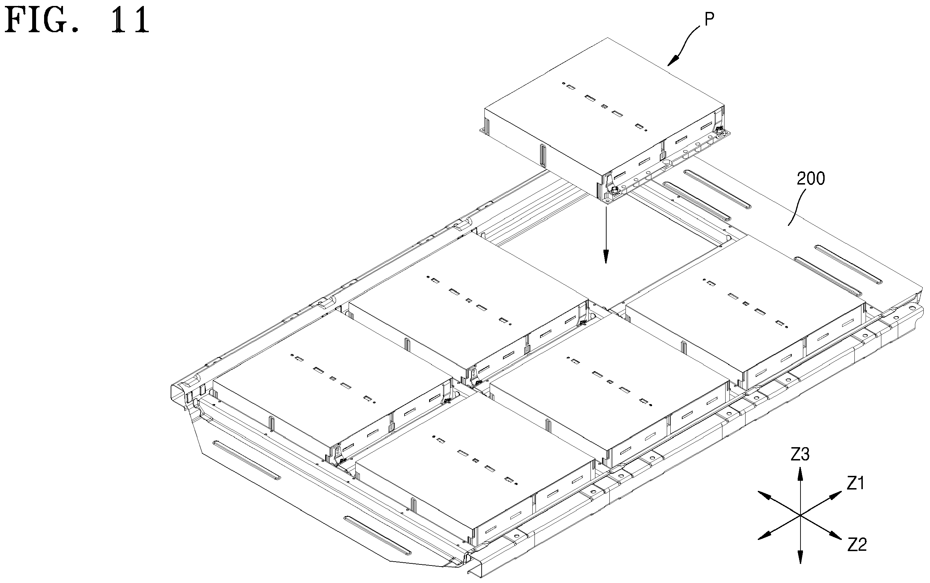

FIG. 10 is an exploded perspective view of a battery pack P according to other embodiments of the present disclosure. FIG. 11 is an exploded perspective view of a power supply device including a plurality of battery packs P shown in FIG. 10.

Referring to FIGS. 10 and 11, the battery pack P, according to other embodiments of the present disclosure, may include the battery pack described above with reference to FIGS. 1 to 9 and an electrical connection or a fluidic connection between a plurality of cell stacks S or a plurality of battery cells 10 that forms the battery pack. For example, the electrical connection of the battery pack P may include a circuit board 100 disposed on the plurality of cell stacks S, and the plurality of cell stacks S or the plurality of battery cells 10 may be electrically connected to each other by using bus bars B formed on the circuit board 100. Also, the fluidic connection of the battery pack P may include a duct 130 that extends across the cell stacks S in the second direction Z2 and is connected to the cut-out portions C of the first and second side plates SP1 and SP2 that forms both ends of the battery pack P in the second direction Z2. The duct 130 may be formed at a position corresponding to the rear reinforcement plate RR and the front reinforcement plate FR overlapping each other in the first direction Z1. For example, the duct 130 and the rear and front reinforcement plates RR and FR overlapping each other may be arranged at upper and lower positions facing each other in the third direction Z3.

In embodiments of the present disclosure, the duct 130 may have a slot that is inserted into the first coupling portions RRa and FRa of the rear reinforcement plate RR and the front reinforcement plate FR, and the duct 130 may have a substantially U-shaped cross-section that is open at both ends in the second direction Z2 and open upwardly in the third direction Z3. In various embodiments of the present disclosure, the duct 130 may provide a flow path for a cooling fluid, such as outside air. Also, the duct 130 may provide a discharge path for a gas discharged from a vent formed in the upper surface of the battery cells 10 on which electrode terminals are formed. Also, the duct 130 may provide mutual support between the modules (or the cell stacks S) adjacent to each other in the first direction Z1. Also, the duct 130 may face an air discharge strip 110 of the circuit board 100 in which a plurality of holes are open in the third direction Z3. The duct 130 may face the cut-out portions C of the first and second side plates SP1 and SP2, which are open in the second direction Z2. Also, the duct 130 may be fluidly connected to the outside of the battery pack P via the open top of the U-shaped cross-section and both ends open in the second direction Z2. FIG. 11 is an exploded perspective view of a power supply device 200 including a plurality of battery packs P shown in FIG. 10.

The battery pack may include the plurality of cell stacks. The structural rigidity of the battery pack may be reinforced by the plates that extend across the inside of the battery pack, and the robustness of the battery pack against external impact or deformation may be provided by (or improved by) the plates that extend across the inside of the battery pack in two different directions.

The battery pack may have an extended form in which the plurality of modules are provided by repeatedly stacking the module units having substantially the same structure, and the battery pack may have extendability to adaptively include a variable number of modules according to desired electrical outputs and capacities.

It should be understood that the embodiments described herein should be considered in a descriptive sense and not for purposes of limitation. Descriptions of features or aspects within each embodiment should typically be considered as available for other similar features or aspects in other embodiments. While embodiments of the present disclosure have been described with reference to the figures, it will be understood by those of ordinary skill in the art that various changes in form and details may be made therein without departing from the scope of the present disclosure as defined by the following claims and their equivalents.

Embodiments are set out in the following clauses:
Clause 1. A battery pack comprising:
   first and second cell stacks each comprising a plurality of battery cells arranged forward and rearward in a first direction, the first and second cell stacks being adjacent to each other in a second direction crossing the first direction;
   a first middle plate extending across between side surfaces of the first and second cell stacks, in the first direction;
   a front end plate and a rear reinforcement plate respectively coupled to one end and another end of the first middle plate and respectively extending in the second direction across front and rear surfaces of the first and second cell stacks; and
   first and second side plates respectively extending across side surfaces of the first and second cell stacks on sides opposite to the first middle plate in the second direction.
Clause 2. The battery pack as claimed in clause 1, wherein a plurality of protrusions are formed on side surfaces on both sides of the first middle plate in the second direction and protrude toward side surfaces of the battery cells adjacent to each other so that the protrusions are arranged between the side surfaces of the battery cells.
Clause 3. The battery pack as claimed in clause 2, wherein a plurality of other protrusions are formed on inner surfaces of the first and second side plates facing the battery cells and protrude toward side surfaces of the battery cells adjacent to each other so that the protrusions are arranged between the side surfaces of the battery cells.
Clause 4. The battery pack as claimed in clause 1, wherein a front coupling portion and a rear coupling portion of the first middle plate are respectively formed at one end of the first middle plate coupled to the front end plate and another end of the first middle plate coupled to the rear reinforcement plate, and protrude in the second direction crossing the first direction in which the first middle plate extends.
Clause 5. The battery pack as claimed in clause 4, wherein a height of each of the front coupling portion and the rear coupling portion of the first middle plate is lower than that of the first middle plate in a third direction crossing the first and second directions.
Clause 6. The battery pack as claimed in clause 1, wherein a first coupling portion of the front end plate recessed toward the inside of the front end plate in the first direction and a first coupling portion of the rear reinforcement plate recessed toward the inside of the rear reinforcement plate in the first direction are respectively formed at a central position of the front end plate coupled to one end of the first middle plate and a central position of the rear reinforcement plate coupled to another end of the first middle plate.
Clause 7. The battery pack as claimed in clause 6, wherein a height of the first coupling portion of the front end plate is less than that of the front end plate in a third direction crossing the first and second directions, and
   a height of the first coupling portion of the rear reinforcement plate is greater than that of the rear reinforcement plate in the third direction.
Clause 8. The battery pack as claimed in clause 7, wherein the first coupling portion of the rear reinforcement plate protrudes upward in the third direction from the central position of the rear reinforcement plate.
Clause 9. The battery pack as claimed in clause 1, wherein the front end plate and the rear reinforcement plate have different heights from each other in a third direction crossing the first and second directions.
Clause 10. The battery pack as claimed in clause 1, further comprising third and fourth cell stacks, each comprising a plurality of battery cells arranged forward and rearward in the first direction, the third and fourth cell stacks being arranged on a rear side of the first and second cell stacks in the first direction and adjacent to each other in the second direction crossing the first direction.
Clause 11. The battery pack as claimed in clause 10, further comprising:
   a second middle plate extending in the first direction across between side surfaces of the third and fourth cell stacks; and
   a front reinforcement plate and a rear end plate respectively coupled to one end and another end of the second middle plate and respectively extending in the second direction across front and rear surfaces of the third and fourth cell stacks,
   wherein the first and second side plates extend across side surfaces of the first to fourth cell stacks on the sides opposite to the first and second middle plates in the second direction.
Clause 12. The battery pack as claimed in clause 11, wherein the rear reinforcement plate, which extends across the rear surfaces of the first and second cell stacks, and the front reinforcement plate, which extends across the front surfaces of the third and fourth cell stacks, overlap each other in the first direction.
Clause 13. The battery pack as claimed in clause 12, wherein the rear reinforcement plate and the front reinforcement plate overlapping each other in the first direction are coupled to first coupling portions of the first and second side plates arranged at central positions of the first and second side plates.
Clause 14. The battery pack as claimed in clause 13, wherein the first coupling portions of the first and second side plates are recessed toward the inside of the first and second side plates in the second direction and have heights less than those of the first and second side plates in a third direction crossing the first and second directions.
Clause 15. The battery pack as claimed in clause 14, wherein, in the first and second side plates, cut-out portions arranged above and recessed downward toward the first coupling portions of the first and second side plates are formed above the first coupling portions of the first and second side plates in the third direction.
Clause 16. The battery pack as claimed in clause 11, wherein the first and second middle plates are spaced apart from each other in the first direction, and individually cover the side surfaces of the first and third cell stacks arranged in the first direction or individually cover the side surfaces of the second and fourth cell stacks arranged in the first direction, and
   wherein the first side plate continuously covers the side surfaces of the first and third cell stacks arranged in the first direction, and
   the second side plate continuously covers the side surfaces of the second and fourth cell stacks arranged in the first direction.
Clause 17. The battery pack as claimed in clause 16, wherein the rear reinforcement plate and the front reinforcement plate extend in the second direction crossing the first direction in which the first and second middle plates extend,
   wherein the rear reinforcement plate and the front reinforcement plate pass through a space between the first and second middle plates and continuously extend in a direction crossing the direction in which the first and second middle plates extend.
Clause 18. The battery pack as claimed in clause 11, wherein second and third coupling portions of the front and rear end plates, for coupling with the first and second side plates, are formed at both ends of the front and rear end plates in the second direction.
Clause 19. The battery pack as claimed in clause 18, wherein each of the front and rear end plates comprises: an upper wide portion adjacent to electrode terminals of the battery cells; and a lower narrow portion in which the second and third coupling portions of the front and rear end plates are formed.
Clause 20. The battery pack as claimed in clause 18, wherein second and third coupling portions of the first and second side plates bend in the second direction from lower positions of the first and second side plates to surround the second and third coupling portions of the front and rear end plates.

## Claims

1. A battery pack comprising:
first and second cell stacks, each comprising a plurality of battery cells arranged in a first direction, the first and second cell stacks being adjacent to each other in a second direction crossing the first direction;
a first middle plate extending in the first direction between side surfaces of the first and second cell stacks;
a front end plate and a rear reinforcement plate respectively coupled to one end and another end of the first middle plate and respectively extending in the second direction along front and rear surfaces of the first and second cell stacks; and
a first side plate and a second side plate respectively extending in the first direction along side surfaces of the first and second cell stacks on sides opposite to the first middle plate in the second direction.

2. The battery pack as claimed in claim 1, wherein the first middle plate comprises a plurality of protrusions on both side surfaces thereof in the second direction that protrude toward side surfaces of the battery cells adjacent to each other such that the protrusions are respectively arranged between the side surfaces of the battery cells, and optionally wherein, the first side plate and the second side plate each comprise a plurality of protrusions on inner surfaces thereof facing the battery cells that protrude toward side surfaces of the battery cells adjacent to each other such that the protrusions are respectively arranged between the side surfaces of the battery cells.

3. The battery pack as claimed in claim 1 or claim 2, wherein the first middle plate comprises a front coupling portion at one end thereof and a rear coupling portion at another end thereof, the front coupling portion being coupled to the front end plate, the rear coupling portion being coupled to the rear reinforcement plate, and
wherein the front coupling portion and the rear coupling portion protrude in the second direction, and optionally wherein a height of each of the front coupling portion and the rear coupling portion is lower than that of the first middle plate in a third direction crossing the first and second directions.

4. The battery pack as claimed in any one of the preceding claims, wherein the front end plate and the rear reinforcement plate each has a first coupling portion recessed in the first direction at a central position thereof, and
wherein the front end plate is coupled to one end of the first middle plate at the corresponding first coupling portion, and the rear reinforcement plate is coupled to another end of the first middle plate at the corresponding first coupling portion, optionally wherein a height of the first coupling portion of the front end plate is less than that of the front end plate in a third direction crossing the first and second directions, and
wherein a height of the first coupling portion of the rear reinforcement plate is greater than that of the rear reinforcement plate in the third direction, and further optionally wherein the first coupling portion of the rear reinforcement plate protrudes upwardly in the third direction at the central position of the rear reinforcement plate.

5. The battery pack as claimed in any one of the preceding claims, wherein the front end plate and the rear reinforcement plate have different heights from each other in a third direction crossing the first and second directions.

6. The battery pack as claimed in any one of the preceding claims, further comprising third and fourth cell stacks, each comprising a plurality of battery cells arranged in the first direction, the third and fourth cell stacks being respectively arranged on a rear side of the first and second cell stacks in the first direction and adjacent to each other in the second direction.

7. The battery pack as claimed in claim 6, further comprising:
a second middle plate extending in the first direction between side surfaces of the third and fourth cell stacks; and
a front reinforcement plate and a rear end plate respectively coupled to one end and another end of the second middle plate and respectively extending in the second direction along front and rear surfaces of the third and fourth cell stacks,
wherein the first and second side plates extend in the first direction along side surfaces of the first to fourth cell stacks on the sides opposite to the first and second middle plates in the second direction.

8. The battery pack as claimed in claim 7, wherein the rear reinforcement plate extends along the rear surfaces of the first and second cell stacks, and the front reinforcement plate extends across the front surfaces of the third and fourth cell stacks, and
wherein the rear reinforcement plate and the front reinforcement plate overlap each other in the first direction.

9. The battery pack as claimed in claim 8, wherein the rear reinforcement plate and the front reinforcement plate are coupled to first coupling portions of the first and second side plates arranged at central positions of the first and second side plates.

10. The battery pack as claimed in claim 9, wherein the first coupling portions of the first and second side plates are recessed in the second direction and have heights less than that of the first and second side plates in a third direction crossing the first and second directions.

11. The battery pack as claimed in claim 10, wherein the first and second side plates each have cut-out portions arranged above and recessed downwardly toward the first coupling portions of the first and second side plates, and
wherein the cut-out portions are formed above the first coupling portions of the first and second side plates in the third direction.

12. The battery pack as claimed in any one of claims 7 to 11, wherein the first and second middle plates are spaced apart from each other in the first direction and individually cover the side surfaces of the first and third cell stacks or individually cover the side surfaces of the second and fourth cell stacks,
wherein the first side plate continuously covers the side surfaces of the first and third cell stacks arranged in the first direction, and
wherein the second side plate continuously covers the side surfaces of the second and fourth cell stacks arranged in the first direction and optionally wherein the rear reinforcement plate and the front reinforcement plate extend in the second direction, and
wherein the rear reinforcement plate and the front reinforcement plate pass through a space between the first and second middle plates and continuously extend in a direction crossing the direction in which the first and second middle plates extend.

13. The battery pack as claimed in any one of claims 7 to 12, wherein the front end plate and the rear end plate each comprise second and third coupling portions at both ends of the front and rear end plates in the second direction for coupling with the first and second side plates, respectively.

14. The battery pack as claimed in claim 13, wherein each of the front and rear end plates has a wide upper portion adjacent to electrode terminals of the battery cells and a narrow lower portion at where the second and third coupling portions of the front and rear end plates are formed.

15. The battery pack as claimed in claim 13 or claim 14, wherein the first side plate and the second side plate each comprise second and third coupling portions that are bent in the second direction at lower positions thereof to cover the second and third coupling portions of the front and rear end plates.
